(19) Europäisches Patentamt
European Patent Office
Office européen des brevets

(11) **EP 3 863 685 B1**

(12) **FASCICULE DE BREVET EUROPEEN**

(45) Date de publication et mention
de la délivrance du brevet:
**04.01.2023 Bulletin 2023/01**

(21) Numéro de dépôt: **19818239.6**

(22) Date de dépôt: **08.11.2019**

(51) Classification Internationale des Brevets (IPC):
*A61K 51/04* *(2006.01)* *B01D 15/18* *(2006.01)*
*G21G 1/00* *(2006.01)* *G21G 4/08* *(2006.01)*
*C01F 15/00* *(2006.01)*

(52) Classification Coopérative des Brevets (CPC):
**B01D 15/1871; G21G 1/0005; G21G 4/08**

(86) Numéro de dépôt international:
**PCT/FR2019/052675**

(87) Numéro de publication internationale:
**WO 2020/099769 (22.05.2020 Gazette 2020/21)**

(54) **PROCÉDÉ DE PRÉPARATION D'AU MOINS UN GÉNÉRATEUR À HAUTE TENEUR EN RADIUM-228**

VERFAHREN ZUR HERSTELLUNG EINES HOCHKONZENTRIERTEN RADIUM-228-GENERATORS

PROCESS FOR THE PRODUCTION OF A HIGH CONTENT RADIUM-228-GENERATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2018 FR 1860561**

(43) Date de publication de la demande:
**18.08.2021 Bulletin 2021/33**

(73) Titulaire: **Orano Med**
**92320 Chatillon (FR)**

(72) Inventeurs:
• **TORGUE, Julien**
**Gaithersburg, MD 20878 (US)**
• **DUREAU, Rémy**
**87510 SAINT-GENCE (FR)**

(74) Mandataire: **Brevalex**
**95, rue d'Amsterdam**
**75378 Paris Cedex 8 (FR)**

(56) Documents cités:
**WO-A2-02/05859** **WO-A2-2008/113792**
**US-A1- 2006 153 760**

## Description

## DOMAINE TECHNIQUE

L'invention se rapporte au domaine de la production d'isotopes radioactifs, aussi dits radioisotopes.

Plus spécifiquement, elle se rapporte à un procédé permettant de préparer un ou plusieurs générateurs à haute teneur en radium-228 à partir d'une solution aqueuse comprenant du thorium-232 et du radium-228.

Ce ou ces générateurs peuvent notamment servir à produire du thorium-228 à partir duquel peuvent être obtenus du radium-224, puis du plomb-212 et du bismuth-212.

Le procédé et le(s) générateur(s) qu'il permet de préparer sont donc susceptibles de trouver des applications notamment dans la fabrication de radiopharmaceutiques à base de plomb-212 ou de bismuth-212, utiles en médecine nucléaire et, en particulier, en radiothérapie alpha ciblée pour le traitement des cancers.

## ÉTAT DE LA TECHNIQUE ANTÉRIEURE

La radiothérapie alpha ciblée, aussi appelée alphathérapie ciblée, consiste à injecter un isotope radioactif lié à un vecteur, tel qu'un anticorps, capable de cibler très précisément des sites spécifiques présent à la surface de cellules cancéreuses. L'énergie émise par la décroissance radioactive naturelle du radioisotope permet alors de détruire les cellules cancéreuses tout en limitant des dommages sur les cellules saines environnantes.

Certains descendants du thorium-232 et, en particulier, le plomb-212 et le bismuth-212, qui est le radioisotope fils du plomb-212, sont susceptibles d'être utilisés en alphathérapie ciblée, notamment dans le traitement des cancers du pancréas, des autres cancers intrapéritonéaux et des mélanomes, maladies pour lesquelles l'alphathérapie ciblée a fait l'objet de tests précliniques, en particulier aux USA.

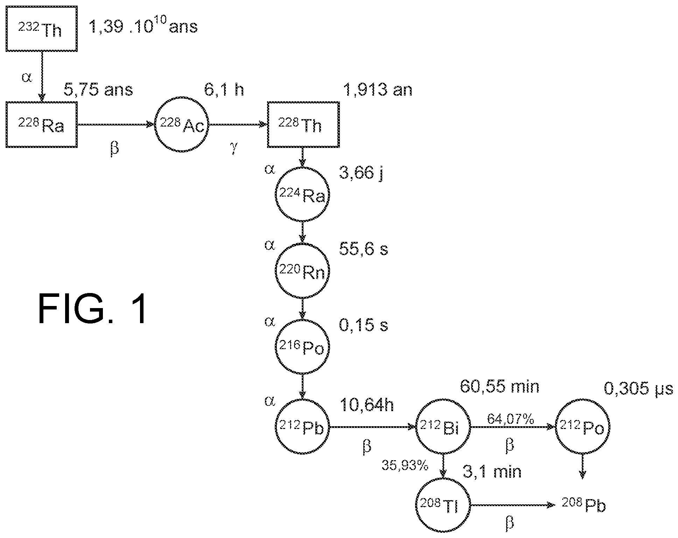

Comme le montre la figure 1 jointe en annexe qui représente la chaîne de décroissance, aussi dite de désintégration, naturelle du thorium-232 dans laquelle s'inscrivent le plomb-212 et le bismuth-212 :

- le plomb-212 peut être produit par décroissance radioactive du radium-224,
- le radium-224 peut être produit par décroissance radioactive du thorium-228,
- le thorium-228 peut être produit par décroissance radioactive du radium-228, tandis que
- le radium-228 peut être produit par décroissance radioactive du thorium-232 qui représente le composant majeur du thorium naturel que l'on extrait de minerais comme les monazites ou les thorites.

La production du plomb-212, du radium-224 et du thorium-228 peut être réalisée au moyen de ce que l'on appelle un « générateur », c'est-à-dire une colonne de chromatographie en phase liquide qui comprend typiquement une phase stationnaire solide sur laquelle est fixé sélectivement le radioisotope père et qui est régulièrement lavée avec une phase liquide permettant d'éluer le ou les radioisotopes fils qui se forme(nt) par décroissance radioactive du radioisotope père.

Pour préparer un générateur destiné à la production de thorium-228 et comprenant, donc, du radium-228 comme radioisotope père, il est connu de faire circuler une solution aqueuse d'un sel de thorium naturel comprenant à la fois du thorium-232 et du radium-228 dans une colonne dont la phase stationnaire solide est capable de retenir le radium sélectivement vis-à-vis du thorium.

Un matériau de phase stationnaire capable de retenir le radium sélectivement du thorium est, par exemple, celui proposé par la société IBC Advanced Technologies, Inc., sous la référence AnaLig™ Ra-01 pour concentrer des solutions aqueuses radiées avant analyse et pour séparer le radium de substances interférentes.

En théorie, on s'attend à ce que la quantité de radium-228 retenu par la phase stationnaire d'une colonne de chromatographie augmente avec le volume de solution du sel de thorium mis à circuler dans cette colonne dans les limites, bien entendu, de la capacité théorique de rétention du radium-228 par le matériau de phase stationnaire telle qu'indiquée par le fournisseur de ce matériau.

Or, en pratique, tel n'est pas le cas puisqu'une baisse du rendement de rétention du radium-228 par le matériau de phase stationnaire se produit au fur et à mesure que le volume de solution du sel de thorium mis à circuler dans la colonne de chromatographie augmente, avec, pour corollaire, une augmentation de la quantité de radium-228 qui est élué conjointement avec le thorium-232.

À titre d'exemple, pour une colonne de chromatographie comprenant 36 g de particules AnaLig™ Ra-01, les Inventeurs ont observé que le rendement de rétention du radium-228 par ces particules, qui est initialement de 99 %, n'est plus que d'environ 50 % après circulation dans la colonne de chromatographie de 2 200 L d'une solution d'un sel de thorium (données non publiées).

Ainsi, la capacité utile du matériau de phase stationnaire, qui correspond à sa réelle aptitude à retenir le radium-228 dans des conditions opératoires données, est notablement inférieure à sa capacité théorique de rétention telle qu'indiquée par son fournisseur.

Une conséquence en est que, lorsque la colonne de chromatographie est ensuite utilisée comme générateur de thorium-228, la capacité de production de ce générateur est inférieure à ce qu'elle pourrait être si la rétention du radium-228 par la phase stationnaire était meilleure. Ceci se traduit, d'une part, par le fait que les élutions ultérieures de ce générateur que l'on réalise pour récupérer le thorium-228 conduisent à des éluats qui non seulement sont moins chargés en thorium-228 disponible mais dans lesquels celui-ci est plus dilué et, d'autre part, par la nécessité de changer plus souvent de générateur.

De plus, le radium-228 qui n'est pas retenu par le matériau de phase stationnaire lors de la préparation du générateur doit être recyclé, à défaut de quoi ce radium est perdu.

Les Inventeurs se sont donc fixé pour but de trouver une solution à ces problèmes.

Plus spécifiquement, ils se sont fixé pour but de parvenir à augmenter la capacité utile d'un matériau de phase stationnaire apte à retenir le radium sélectivement vis-à-vis du thorium, c'est-à-dire à augmenter la quantité de radium-228 retenu par ce matériau par unité de poids de matériau ou, autrement dit, à produire un générateur à haute teneur en radium-228 à partir d'une solution de thorium-232 et du radium-228.

## EXPOSÉ DE L'INVENTION

Ce but est atteint par l'invention qui propose un procédé de préparation d'au moins un générateur comprenant du radium-228 à partir d'une solution aqueuse A1 comprenant du thorium-232 et du radium-228, le procédé comprenant les étapes suivantes :

   a) circulation dans une première colonne de chromatographie d'un volume V1 de solution aqueuse A1, la première colonne de chromatographie comprenant une première phase stationnaire constituée d'un matériau solide qui retient sélectivement le radium par rapport au thorium ;
   b) au moins un lavage de la première phase stationnaire avec une solution aqueuse A2 ;
   c) élution du radium-228 de la première phase stationnaire avec un volume V3 d'une solution aqueuse A3 comprenant un agent complexant le radium-228, le volume V3 étant compris entre 0,005 % et 1 % et, de préférence, entre 0,01 % et 1 %, du volume V1 de solution aqueuse A1 ayant circulé dans la première colonne de chromatographie, moyennant quoi on obtient une solution aqueuse A4 qui comprend des complexes de radium-228 ;
   d) dissociation des complexes de radium-228 présents dans la solution aqueuse A4 par modification du pH de la solution aqueuse A4, moyennant quoi on obtient une solution aqueuse A5 comprenant du radium-228 décomplexé ;
   e) chargement d'une deuxième colonne de chromatographie avec la solution aqueuse A5, la deuxième colonne de chromatographie comprenant une deuxième phase stationnaire constituée du même matériau que la première phase stationnaire ; et
   f) au moins un lavage de la deuxième phase stationnaire avec une solution aqueuse A6, moyennant quoi on obtient ledit au moins un générateur.

Conformément à l'invention, la solution aqueuse A1, qui comprend du thorium-232 et du radium-228, est, de préférence, une solution aqueuse issue de la dissolution dans de l'eau d'un sel de thorium naturel, c'est-à-dire de thorium extrait d'un minerai de thorium tel qu'une monazite ou une thorite.

Ce sel de thorium naturel est préférentiellement un nitrate de thorium, auquel cas la solution aqueuse A1 comprend de l'acide nitrique.

Toutefois, le sel de thorium naturel peut également être un sel autre qu'un nitrate comme un chlorure de thorium, auquel cas la solution aqueuse A1 comprend de l'acide chlorhydrique.

Conformément à l'invention, le matériau qui constitue les première et deuxième phases stationnaires peut être tout matériau de phase stationnaire qui est capable de retenir le radium sélectivement vis-à-vis du thorium.

Un tel matériau peut comprendre un support solide inorganique (tel que des particules de silice ou d'alumine ou un gel de silice), organique (tel qu'un polymère) ou inorganique-organique, qui est fonctionnalisé, par greffage ou imprégnation, par des molécules organiques capables de retenir par échange d'ions, reconnaissance moléculaire ou tout autre mécanisme, les ions radium ($Ra^{2+}$) présents dans la solution aqueuse A1 sélectivement des ions thorium ($Th^{4+}$) également présents dans cette solution aqueuse.

Il peut notamment s'agir d'un matériau qui comprend des particules de silice greffées de molécules d'un ligand organique du radium, par exemple un oxacryptand. Un matériau qui est particulièrement bien adapté à la mise en œuvre du procédé de l'invention est, par exemple, celui proposé par la société IBC Advanced Technologies, Inc. sous la référence AnaLig™ Ra-01.

La teneur en acide nitrique de la solution aqueuse A1 se situe, de préférence, dans la gamme d'acidités préconisée par le fournisseur du matériau de phase stationnaire, par exemple de 0,01 mol/L à 4 mol/L d'acide nitrique pour des particules AnaLig™ Ra-01.

La solution aqueuse A2 est avantageusement une solution aqueuse acide qui comprend le même acide et la même concentration en acide que la solution aqueuse A1.

Il s'agit donc, de préférence, d'une solution aqueuse comprenant de l'acide nitrique, à une concentration de 0,01 mol/L à 4 mol/L, si la solution aqueuse A1 a, elle-même, une telle concentration en acide nitrique.

À l'étape c), le radium-228 retenu par la première phase stationnaire est élué au moyen d'un agent qui va décrocher ce radium-228 de la première phase stationnaire par complexation ou chélation (les deux termes étant considérés ici comme synonymes).

Conformément à l'invention, cet agent complexant ou chélatant, est, de préférence, un acide aminopolycarboxylique ou un sel d'un acide aminopolycarboxylique.

Ainsi, il peut notamment s'agir de l'acide nitrilotriacétique (ou NTA), de l'acide éthylènediaminetétraacétique (ou EDTA), de l'acide diéthylènetriaminepentaacétique (ou DTPA) ou de l'un de leurs sels, préférence étant, toutefois, donnée à l'EDTA et à ses sels tels que ses sels de sodium.

Aussi, la solution aqueuse A3 est-elle préférentiellement une solution qui comprend de l'EDTA ou un sel de celui-ci, à une concentration avantageusement comprise entre 0,03 mol/L et 0,1 mol/L et, mieux encore, égale à 0,09 mol/L d'EDTA et dont le pH est amené, de préférence, à une valeur allant de 10 à 11 par addition d'une base forte telle que l'hydroxyde de sodium.

L'éluat ainsi obtenu - ou solution aqueuse A4 - comprend donc du radium-228 mais sous une forme complexée.

Aussi, l'étape d) vise-t-elle à dissocier les complexes de radium-228 présents dans l'éluat en vue de pouvoir, à l'étape e), charger la deuxième colonne de chromatographie avec une solution aqueuse comprenant du radium-228 décomplexé ou, autrement dit, libre.

Conformément à l'invention, cette dissociation est réalisée en modifiant le pH de la solution aqueuse A4 de sorte à amener ce pH à une valeur à laquelle la capacité de l'agent complexant à complexer le radium-228 est diminuée.

Ainsi, par exemple, si l'agent complexant est l'EDTA ou l'un de ses sels, la dissociation des complexes de radium-228 est réalisée par acidification de la solution aqueuse A4 pour amener le pH de cette solution à une valeur au moins égale à 3 afin d'éviter que l'EDTA ne précipite et, de préférence, au plus égale à 5 pour que le pouvoir complexant de l'EDTA vis-à-vis du radium-228 soit suffisamment abaissé. Dans ce cas, une valeur de pH préférée est comprise entre 4 et 5.

Cette acidification peut être réalisée par un simple ajout d'un acide à la solution aqueuse A4, lequel peut être un acide faible comme l'acide acétique mais est, de préférence, un acide fort tel que l'acide nitrique, pour limiter le volume d'acide devant être ajouté.

Toutefois, dans le cadre de l'invention, l'acidification de la solution aqueuse A4 est, préférentiellement, réalisée en lavant la première phase stationnaire avec au moins une solution aqueuse acide et en ajoutant tout ou partie de la solution aqueuse issue de ce lavage à la solution aqueuse A4.

Plus encore, pour acidifier la solution aqueuse A4, on préfère laver deux fois la première phase stationnaire :

- une première fois avec une solution tampon telle qu'une solution tampon d'acétate de sodium, dont le pH est au moins égal à 3, de préférence, au plus égal à 5 et, idéalement, égal à 4,5 ; et
- une deuxième fois avec une solution aqueuse acide qui comprend avantageusement le même acide que les solutions aqueuses A1 et A2 et qui est donc, de préférence, une solution aqueuse comprenant de l'acide nitrique, à une concentration de 0,01 mol/L à 4 mol/L si les solutions aqueuses A1 et A2 ont, elles-mêmes, une telle concentration en acide nitrique ;

et ajouter tout ou partie des solutions issues de ces deux lavages à la solution aqueuse A4.

En effet, il est avantageux de procéder de la sorte car cela permet non seulement d'acidifier la solution aqueuse A4 mais aussi, par le premier lavage, d'éliminer l'EDTA libre ainsi que les complexes $^{228}$Ra-EDTA retenus dans le volume interstitiel de la première phase stationnaire et, par le deuxième lavage, de reconditionner la première phase stationnaire en vue d'une réutilisation ultérieure de cette phase stationnaire.

Lorsque l'acidification de la solution aqueuse A4 est réalisée par addition d'une ou plusieurs solutions issues du lavage de la première phase stationnaire, alors le procédé peut comprendre, entre les étapes d) et e), un contrôle du pH de la solution aqueuse A5 qui résulte de cette acidification et, si nécessaire, un ajustement de ce pH à une valeur comprise entre 3 et 5 et, de préférence, entre 4 et 5.

À l'étape e), le chargement de la deuxième colonne de chromatographie avec la solution aqueuse A5 consiste en une simple circulation de ce mélange dans cette colonne mais que l'on réalise, de préférence, à un faible débit, par exemple de 1 mL/min à 5 mL/min, pour favoriser la rétention du radium-228 par la deuxième phase stationnaire.

Comme précédemment mentionné, une fois la deuxième colonne de chromatographie chargée avec la solution aqueuse A5, la deuxième phase stationnaire contenue dans cette colonne est soumise à au moins un lavage avec une solution aqueuse A6 (étape f) du procédé), laquelle solution aqueuse A6 est, de préférence, une solution aqueuse acide.

Mieux encore, la deuxième phase stationnaire est soumise à deux lavages :

- un premier lavage pour éliminer l'agent complexant présent dans le volume interstitiel de la deuxième phase stationnaire, que l'on réalise avec une solution tampon telle qu'une solution tampon d'acétate de sodium, par exemple de pH au moins égal à 3, de préférence au plus égal à 5 et, idéalement égal à 4,5 si l'agent complexant est l'EDTA ; et
- un deuxième lavage pour conditionner la deuxième phase stationnaire en vue de l'utilisation ultérieure de la deuxième colonne de chromatographie comme générateur, par exemple de thorium-228, et que l'on réalise avec une solution aqueuse acide comprenant avantageusement le même acide et la même concentration en acide que les solutions aqueuses A1, A2 et A3 ; cette solution aqueuse comprend donc, de préférence, de l'acide nitrique, à une concentration de 0,01 mol/L à 4 mol/L si les solutions aqueuses A1, A2 et A3 ont, elles-mêmes, une telle concentration en acide nitrique.

Conformément à l'invention, l'étape a) est, de préférence, exécutée tant que le rendement de rétention du radium-228 par la première phase stationnaire est supérieur ou égal à une valeur seuil. En d'autres termes, l'étape a) est arrêtée dès que le rendement de rétention du radium-228 par la première phase stationnaire passe au-dessous de cette valeur seuil.

Il en résulte que le volume V1 de solution aqueuse A1 de l'étape a) correspond au volume de solution aqueuse A1 qui circule dans cette colonne aussi longtemps que le rendement de rétention du radium-228 par la première phase stationnaire est supérieur ou égal à la valeur seuil.

De préférence, cette valeur seuil est de 80 % et, mieux encore, de 90 %.

Dans un premier mode de mise en œuvre préféré du procédé de l'invention, on utilise une seule première colonne de chromatographie et une seule deuxième colonne de chromatographie, et on réalise :

- *n* fois les étapes a) à d) au moyen de la première colonne de chromatographie, *n* étant un nombre entier supérieur ou égal à 2, typiquement compris entre 2 et 10 et, mieux encore, entre 4 et 6, moyennant quoi on produit *n* solutions aqueuses A5 que l'on collecte séparément ou ensemble pour obtenir un mélange de solutions aqueuses A5 ;
- l'étape e) de chargement de la deuxième colonne de chromatographie avec les *n* solutions aqueuses A5 ou le mélange de solutions aqueuses A5 ; et
- l'étape f) de lavage de la deuxième phase stationnaire avec la solution aqueuse A6, moyennant quoi on obtient un seul générateur.

Dans un deuxième mode de mise en œuvre préféré de l'invention, on utilise une seule première colonne de chromatographie, *m* deuxièmes colonnes de chromatographie et *m* deuxièmes phases stationnaires, et on réalise :

- *n* fois les étapes a) à d) au moyen de la première colonne de chromatographie, *n* étant un nombre entier supérieur ou égal à 3, typiquement compris entre 3 et 10 et, mieux encore, entre 4 et 6, moyennant quoi on produit *n* solutions aqueuses A5 que l'on collecte séparément ou ensemble pour obtenir un mélange de solutions aqueuses A5 ;
- l'étape e) de chargement des *m* deuxièmes colonnes avec les *n* solutions aqueuses A5 ou le mélange de solutions aqueuses A5, *m* étant un nombre entier supérieur ou égal à 2 mais inférieur à *n* ; et
- l'étape f) de lavage des *m* deuxièmes phases stationnaires avec la solution aqueuse A6, moyennant quoi on obtient *m* générateurs.

Dans un troisième mode de mise en œuvre préféré du procédé de l'invention, on utilise une seule première colonne de chromatographie et une seule deuxième colonne de chromatographie, et on réalise :

- *n* fois les étapes a) à c) au moyen de la première colonne de chromatographie, *n* étant un nombre entier supérieur ou égal à 2, typiquement compris entre 2 et 10 et, mieux encore, entre 4 et 6, moyennant quoi on produit *n* solutions aqueuses A4 que l'on collecte séparément ;
- l'étape d) par un ajout d'acide aux *n* solutions aqueuses A4, moyennant quoi on obtient n solutions aqueuses A5 ;
- l'étape e) de chargement de la deuxième colonne de chromatographie avec les *n* solutions aqueuses A5 ; et
- l'étape f) de lavage de la deuxième phase stationnaire avec la solution aqueuse A6, moyennant quoi on obtient un seul générateur.

Dans un quatrième mode de mise en œuvre préféré du procédé de l'invention, on utilise une seule première colonne de chromatographie et une seule deuxième colonne de chromatographie, et on réalise :

- *n* fois les étapes a) à c) au moyen de la première colonne de chromatographie, *n* étant un nombre entier supérieur ou égal à 2, typiquement compris entre 2 et 10 et, mieux encore, entre 4 et 6, moyennant quoi on produit *n* solutions aqueuses A4 que l'on collecte ensemble pour obtenir un mélange de solutions aqueuses A4;
- l'étape d) par un ajout d'acide au mélange de solutions aqueuses A4, moyennant quoi on obtient une solution aqueuse A5 ;
- l'étape e) de chargement de la deuxième colonne de chromatographie avec la solution aqueuse A5 ; et
- l'étape f) de lavage de la deuxième phase stationnaire avec la solution aqueuse A6, moyennant quoi on obtient un seul générateur.

Dans un cinquième mode de mise en œuvre préféré du procédé de l'invention, on utilise une seule première colonne de chromatographie, *m* deuxièmes colonnes de chromatographie et *m* deuxièmes phases stationnaires, et on réalise :

- *n* fois les étapes a) à c) au moyen de la première colonne de chromatographie, *n* étant un nombre entier supérieur ou égal à 3, typiquement compris entre 3 et 10 et, mieux encore, entre 4 et 6, moyennant quoi on produit *n* solutions aqueuses A4 que l'on collecte séparément ;
- l'étape d) par un ajout d'acide aux *n* solutions aqueuses A4, moyennant quoi on obtient *n* solutions aqueuses A5 ;
- l'étape e) de chargement des *m* deuxièmes colonnes de chromatographie avec les *n* solutions aqueuses A5, *m* étant un nombre entier supérieur ou égal à 2 mais inférieur à *n* ; et

- l'étape f) de lavage des *m* deuxièmes phases stationnaires avec la solution aqueuse A6, moyennant quoi on obtient *m* générateurs.

Dans un sixième mode de mise en œuvre préféré du procédé de l'invention, on utilise une seule première colonne de chromatographie, *m* deuxièmes colonnes de chromatographie et *m* deuxièmes phases stationnaires, et on réalise :

- *n* fois les étapes a) à c) au moyen de la première colonne de chromatographie, *n* étant un nombre entier supérieur ou égal à 3, typiquement compris entre 3 et 10 et, mieux encore, entre 4 et 6, moyennant quoi on produit *n* solutions aqueuses A4 que l'on collecte ensemble pour obtenir un mélange de solutions aqueuses A4;
- l'étape d) par un ajout d'acide au mélange de solutions aqueuses A4, moyennant quoi on obtient une solution aqueuse A5 ;
- l'étape e) de chargement des *m* deuxièmes colonnes de chromatographie avec la solution aqueuse A5, *m* étant un nombre entier supérieur ou égal à 2 mais inférieur à *n* ; et
- l'étape f) de lavage des *m* phases stationnaires avec la solution aqueuse A6, moyennant quoi on obtient *m* générateurs.

Dans un septième mode de mise en œuvre préféré du procédé de l'invention, on utilise une seule première colonne de chromatographie et une seule deuxième colonne de chromatographie, et on réalise :

- *n* fois les étapes a) à e) au moyen de la première et de la deuxième colonne de chromatographie, *n* étant un nombre entier supérieur ou égal à 2, typiquement compris entre 2 et 10 et, mieux encore, entre 4 et 6 ; et
- l'étape f) de lavage de la deuxième phase stationnaire avec la solution aqueuse A6, moyennant quoi on obtient un seul générateur.

Dans un huitième mode de mise en œuvre préféré du procédé de l'invention, on utilise une seule première colonne de chromatographie et une seule deuxième colonne de chromatographie, et on réalise :

- *n* fois les étapes a) à f) au moyen de la première et de la deuxième colonne de chromatographie, *n* étant un nombre entier supérieur ou égal à 2, typiquement compris entre 2 et 10 et, mieux encore, entre 4 et 6, moyennant quoi on obtient un seul générateur à l'issue des *n* étapes a) à f).

Dans un neuvième mode de mise en œuvre préféré du procédé de l'invention, on utilise *l* premières colonnes de chromatographie, *l* premières phases stationnaires et une seule deuxième colonne de chromatographie, et on réalise :

- *n* fois les étapes a) à d) au moyen des *l* premières colonnes de chromatographie, *n* étant un nombre entier supérieur ou égal à 2, typiquement compris entre 2 et 10 et, mieux encore, entre 4 et 6, et *l* étant un nombre entier supérieur ou égal à 2 mais inférieur ou égal à *n*, moyennant quoi on produit *n* solutions aqueuses A5 que l'on collecte séparément ou ensemble pour obtenir un mélange de solutions aqueuses A5 ;
- l'étape e) de chargement de la deuxième colonne de chromatographie avec les *n* solutions aqueuses A5 ou le mélange de solutions aqueuses A5 ; et
- l'étape f) de lavage de la deuxième phase stationnaire avec la solution aqueuse A6, moyennant quoi on obtient un seul générateur.

Dans un dixième mode de mise en œuvre préféré du procédé de l'invention, on utilise *l* premières colonnes de chromatographie, *l* premières phases stationnaires et une seule deuxième colonne de chromatographie, et on réalise :

- *n* fois les étapes a) à c) au moyen des *l* premières colonnes de chromatographie, *n* étant un nombre entier supérieur ou égal à 2, typiquement compris entre 2 et 10 et, mieux encore, entre 4 et 6, et *l* étant un nombre entier supérieur ou égal à 2 mais inférieur ou égal à *n*, moyennant quoi on produit *n* solutions aqueuses A4 que l'on collecte séparément ;
- l'étape d) par un ajout d'acide aux *n* solutions aqueuses A4, moyennant quoi on obtient *n* solutions aqueuses A5 ;
- l'étape e) de chargement de la deuxième colonne de chromatographie avec les *n* solutions aqueuses A5 ; et
- l'étape f) de lavage de la deuxième phase stationnaire avec la solution aqueuse A6, moyennant quoi on obtient un seul générateur.

Dans un onzième mode de mise en œuvre préféré du procédé de l'invention, on utilise *l* premières colonnes de chromatographie, *l* premières phases stationnaires et une seule deuxième colonne de chromatographie, et on réalise :

- *n* fois les étapes a) à c) au moyen des *l* premières colonnes de chromatographie, *n* étant un nombre entier supérieur ou égal à 2, typiquement compris entre 2 et 10 et, mieux encore, entre 4 et 6, et *l* étant un nombre entier supérieur ou égal à 2 mais inférieur ou égal à *n*, moyennant quoi on produit *n* solutions aqueuses A4 que l'on collecte ensemble pour obtenir un mélange de solutions aqueuses A4 ;
- l'étape d) par un ajout d'acide au mélange de solutions aqueuses A4, moyennant quoi on obtient une solution aqueuse A5 ;

- l'étape e) de chargement de la deuxième colonne de chromatographie avec la solution aqueuse A5 ; et
- l'étape f) de lavage de la deuxième phase stationnaire avec la solution aqueuse A6, moyennant quoi on obtient un seul générateur.

Dans un douzième mode de mise en œuvre préféré du procédé de l'invention, on utilise *l* premières colonnes de chromatographie, *l* premières phases stationnaires et une seule deuxième colonne de chromatographie, et on réalise :

- *n* fois les étapes a) à e) au moyen des *l* premières colonnes de chromatographie et de la deuxième colonne de chromatographie, *n* étant un nombre entier supérieur ou égal à 2, typiquement compris entre 2 et 10 et, mieux encore, entre 4 et 6, et *l* étant un nombre entier supérieur ou égal à 2 mais inférieur ou égal à *n,* moyennant quoi on obtient une seule deuxième colonne de chromatographie ; et
- l'étape f) de lavage de la deuxième phase stationnaire avec la solution aqueuse A6, moyennant quoi on obtient un seul générateur.

Dans un treizième mode de mise en œuvre préféré du procédé de l'invention, on utilise *l* premières colonnes de chromatographie, *l* premières phases stationnaires et une seule deuxième colonne de chromatographie, et on réalise :

- *n* fois les étapes a) à f) au moyen des *l* premières colonnes de chromatographie et de la deuxième colonne de chromatographie, *n* étant un nombre entier supérieur ou égal à 2, typiquement compris entre 2 et 10 et, mieux encore, entre 4 et 6, et *l* étant un nombre entier supérieur ou égal à 2 mais inférieur ou égal à *n,* moyennant quoi on obtient un seul générateur.

On notera que, lorsque les modes de réalisation neuf à treize, sont mis en œuvre avec un nombre entier *l* qui est égal à *n,* alors cela signifie que l'on utilise, pour réaliser *n* fois les étapes a) à c) ou a) à d), une première colonne différente à chaque fois.

Quel que soit le mode de mise en œuvre du procédé de l'invention, le ou les générateurs obtenus sont préférentiellement destinés à produire du thorium-228.

D'autres caractéristiques et avantages du procédé de l'invention apparaîtront à la lecture du complément de description qui suit et qui se rapporte à deux des modes de mise en œuvre préférés de ce procédé.

Il va de soi que ces modes de mise en œuvre ne sont donnés qu'à titre d'illustrations de l'objet de l'invention et ne constituent en aucun cas des limitations de cet objet.

**BRÈVE DESCRIPTION DES FIGURES**

La figure 1, déjà commentée, représente la chaîne de décroissance radioactive du thorium-232.
La figure 2 représente schématiquement un premier mode de mise en œuvre du procédé de l'invention.
La figure 3 représente schématiquement un deuxième mode de mise en œuvre du procédé de l'invention.

**EXPOSÉ DÉTAILLÉ DE MODES DE MISE EN ŒUVRE PARTICULIERS**

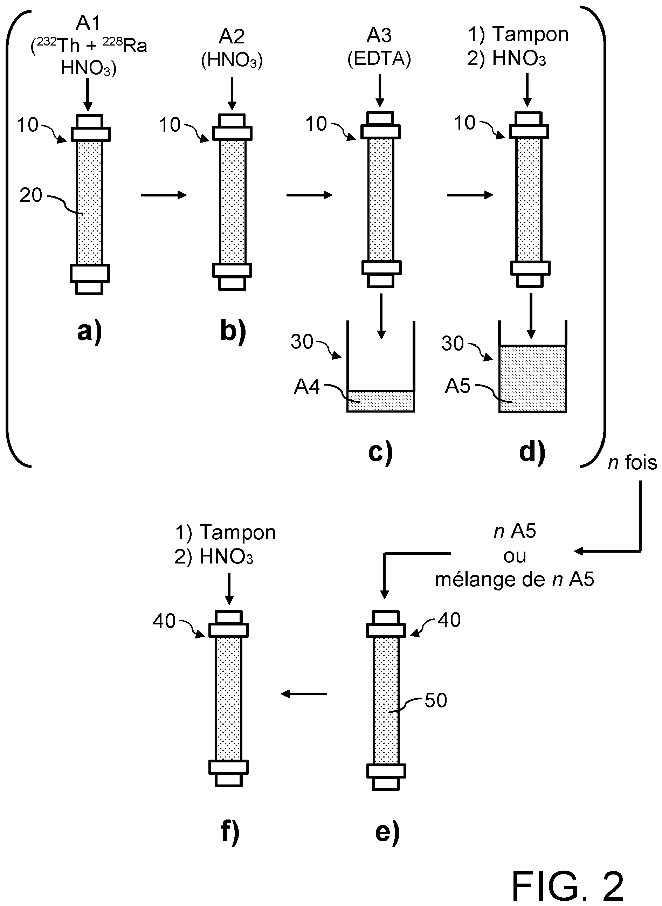

On se réfère tout d'abord à la figure 2 qui représente schématiquement un premier mode de mise en œuvre du procédé de l'invention.

Dans ce premier mode de mise en œuvre, le procédé vise à préparer un seul générateur.

Il comprend tout d'abord la réalisation *n* fois, au moyen d'une seule première colonne de chromatographie 10 comprenant une phase stationnaire 20, la séquence d'étapes a) à d) suivante :

a) la circulation d'une solution aqueuse A1 comprenant du thorium-232, du radium-228 et de l'acide nitrique dans la colonne 10 aussi longtemps que le rendement de rétention du radium-228 par la phase stationnaire 20 est au moins égal à une valeur seuil ;
b) lorsque le rendement de rétention du radium-228 devient inférieur à la valeur seuil, un lavage de la phase stationnaire 20 avec une solution aqueuse A2 comprenant de l'acide nitrique pour éliminer de la phase stationnaire 20 le thorium-232 présent dans le volume interstitiel de cette phase stationnaire ;
c) l'élution du radium-228 de la phase stationnaire 20 avec une solution aqueuse A3 qui comprend de l'EDTA comme agent complexant, ainsi que le recueil dans un récipient 30 de l'éluat, ou solution aqueuse A4, comprenant le radium-228 sous la forme de complexes $^{228}$Ra-EDTA ; et
d) la dissociation des complexes $^{228}$Ra-EDTA par deux lavages successifs de la phase stationnaire 20, le premier avec une solution tampon de pH acide et le second avec une solution aqueuse nitrique, et le recueil des deux solutions de lavage à leur sortie de la colonne 10 dans le récipient 30, moyennant quoi on obtient une solution aqueuse A5 comprenant du radium-228 décomplexé ;

*n* étant un nombre entier au moins égal à 2, typiquement compris entre 2 et 10 et, de préférence égal à 4 ou 5.

Les étapes c) et d) des *n* séquences d'étapes a) à d) peuvent être réalisées en utilisant *n* récipients 30, chaque récipient servant pour une seule étape c) et une seule étape d), auquel cas on obtient, à l'issue de la dernière étape d) des *n* séquences d'étapes a) à d), *n* solutions aqueuses A5.

En variante, les étapes c) et d) des n séquences d'étapes a) à d) peuvent être réalisées en utilisant un seul et même récipient 30, auquel cas ce récipient contient, à l'issue de la dernière étape d) des *n* séquences d'étapes a) à d), un mélange de *n* solutions aqueuses A5.

Puis, le procédé comprend la réalisation, au moyen d'une seule deuxième colonne de chromatographie 40 comprenant une phase stationnaire 50, des deux étapes suivantes :

> e) le chargement de la deuxième colonne 40 avec les *n* solutions aqueuses A5 ou avec le mélange de *n* solutions aqueuses A5 pour fixer sur la phase stationnaire 50 le radium-228 contenu dans ces solutions ou ce mélange ; et
> f) deux lavages successifs de la phase stationnaire 50, le premier avec une solution tampon de pH acide pour éliminer de cette phase stationnaire l'EDTA, et le second avec une solution aqueuse comprenant de l'acide nitrique pour conditionner la phase stationnaire 50 en vue de l'utilisation ultérieure de la colonne de chromatographie 40 comme générateur.

Toutes les étapes du procédé, qui sont détaillées ci-après, sont, de préférence, effectuées à température ambiante, c'est-à-dire à une température de 20°C à 25°C.

*\* Étape a) :*

La colonne 10 comprend une phase stationnaire 20 qui est constituée de particules AnaLig™ Ra-01. Cette phase stationnaire retient le radium, quel qu'en soit l'isotope, sélectivement vis-à-vis du thorium, quel qu'en soit l'isotope.

À titre d'exemple, cette colonne présente un volume de lit (ou BV pour « Bed Volume ») de 78,54 mL et contient de 34 à 37 g de particules AnaLig™ Ra-01.

Préalablement à la réalisation de la première étape a) des *n* séquences d'étapes, la phase stationnaire 20 est conditionnée par percolation d'une solution aqueuse comprenant de 0,01 mol/L à 4 mol/L, de préférence de 0,05 mol/L à 1 mol/L et, mieux encore, 0,1 mol/L d'acide nitrique.

Une fois ce conditionnement effectué, on alimente la colonne 10 avec la solution aqueuse A1 qui est issue de la dissolution d'un nitrate de thorium naturel dans de l'eau et qui présente une teneur en acide nitrique qui est comprise entre 0,01 mol/L et 4 mol/L, de préférence entre 0,05 mol/L et 1 mol/L et, mieux encore, de 0,1 mol/L.

Cette solution aqueuse contient du radium-228 (par exemple, à hauteur de 1 MBq/L), de préférence à l'équilibre radioactif avec le thorium-232 dont il est issu.

La colonne 10 est alimentée en solution aqueuse de façon continue, à un débit typiquement compris entre 10 mL/min et 100 mL/min, aussi longtemps que le rendement de rétention du radium-228 est supérieur ou égal à une valeur seuil qui est, de préférence, de 80 % et, mieux encore, de 90 %.

Lorsque le rendement de rétention du radium-228 passe en-dessous de la valeur seuil, alors l'alimentation de la colonne 10 est arrêtée.

Le rendement de rétention, noté $R_T$, est calculé en déterminant l'activité du radium-228 dans des échantillons de la solution aqueuse A1 qui sont prélevés à son entrée et à sa sortie de la colonne 10 et en appliquant la formule suivante :

$$R_T = \frac{A_{ini} - A_{fin}}{A_{ini}} \times 100$$

avec :

$A_{ini}$ : activité du radium-228 dans la solution aqueuse A1 à son entrée dans la colonne 10, exprimée en MBq ;

$A_{fin}$ : activité du radium-228 dans la solution aqueuse A1 à sa sortie de la colonne 10, exprimée en MBq.

Comme connu en soi, l'activité du radium-228 est déterminée de manière indirecte, à savoir qu'elle est calculée à partir de l'activité que présente son fils, l'actinium-228, au terme d'une période de 4 jours après le prélèvement des échantillons, l'activité de l'actinium-228 étant, elle, mesurée directement dans les échantillons par spectrométrie gamma.

*\* Étape b) :*

Le lavage de la phase stationnaire 20 est réalisé en faisant circuler dans la colonne 10 plusieurs BV, par exemple 15 BV, de solution aqueuse A2, laquelle comprend de 0,01 mol/L à 4 mol/L, de préférence de 0,05 mol/L à 1 mol/L et, mieux encore, 0,1 mol/L d'acide nitrique, à un débit, par exemple, de 40 mL/min.

*\* Étape c) :*

L'élution du radium-228 de la phase stationnaire 20 est réalisée en faisant circuler dans la colonne 10 la solution aqueuse A3 qui comprend de 0,03 mol/L à 0,1 mol/L et, de préférence, 0,09 mol/L d'EDTA et dont le pH est amené à une valeur préférentiellement de 10 à 11 par addition d'une base forte telle que l'hydroxyde de sodium.

Le nombre de BV de solution aqueuse A3, qui sont mis à circuler dans la colonne 10, est choisi de sorte qu'il corresponde à un volume de solution aqueuse A3 compris entre 0,005 % et 1 % et, de préférence, entre 0,01 % et 1 % du volume de solution aqueuse A1 ayant circulé dans cette colonne au cours de l'étape a) et ce, pour obtenir une élution du radium-228 concentrante, c'est-à-dire une élution du radium-228 qui conduit à une solution aqueuse A4 dans laquelle l'activité du radium-228 est au moins 100 fois plus élevée que celle du radium-228 dans la solution aqueuse A1.

Ainsi, par exemple, pour un volume de 1000 L à 1200 L de solution aqueuse A1 ayant circulé dans la colonne 10, l'élution du radium-228 est réalisée avec un nombre de BV de solution aqueuse A3 correspondant à un volume compris entre 50 mL et 12 L, de préférence entre 250 mL et 12 L, soit, par exemple, 6 BV pour une colonne 10 ayant un BV de 78,54 mL.

Pour une élution optimale, la solution aqueuse A3 est, de préférence, mise à circuler dans la colonne 10 en deux temps. Ainsi, par exemple, pour 6 BV, 2 BV sont tout d'abord utilisés à un débit de 10 mL/min, puis, après 20 minutes de pause, les 4 BV restants sont utilisés à un débit de 5 mL/min.

Toutefois, il est tout à fait possible de faire circuler la solution aqueuse A3 dans la colonne 10 de façon continue (c'est-à-dire sans prévoir de pause) et/ou à un débit unique, ce débit pouvant aller de 1 mL/min à 30 mL/min.

Par contre, il est important de maintenir le pH de la solution aqueuse A3 à une valeur au plus égale à 11 pour minimiser les risques de dissolution des particules de silice qui constituent le support solide de la phase stationnaire 20.

* *Étape d) :*

Comme précédemment indiqué, cette étape consiste à soumettre la phase stationnaire 20 à deux lavages successifs et à recueillir les solutions issues de ces deux lavages dans le récipient 30 dans lequel a été recueilli à l'étape c) l'éluat, ou solution aqueuse A4, comprenant le radium-228 sous la forme de complexes $^{228}$Ra-EDTA.

Le premier lavage, qui permet d'éliminer de la phase stationnaire 20 l'EDTA libre ainsi que les complexes $^{228}$Ra-EDTA retenus dans le volume interstitiel de cette phase stationnaire, est réalisé en faisant circuler dans la colonne 10 plusieurs BV, par exemple 5 BV, d'une solution tampon dont le pH est au moins égal à 3 pour éviter que l'EDTA ne précipite à l'intérieur de la colonne 10 et au plus égal à 5.

Cette solution tampon est, par exemple, une solution tampon d'acétate de sodium de pH 4,5.

Le deuxième lavage, qui permet, lui, de reconditionner la phase stationnaire 20 en vue de sa réutilisation dans la mise en œuvre de la séquence d'étapes a) à d) suivante, est réalisé en faisant circuler dans la colonne 10 plusieurs BV, par exemple 5 BV, d'une solution aqueuse nitrique dont l'acidité permet une épuration de la phase stationnaire 20 mais sans que l'ajout de la solution issue de ce deuxième lavage au mélange déjà présent dans le récipient 30 n'abaisse le pH de ce mélange en-dessous de 3 pour éviter que l'EDTA ne précipite.

Aussi, cette solution aqueuse nitrique a-t-elle, de préférence, une teneur en acide nitrique de 0,1 mol/L à 1 mol/L et, mieux encore, de 0,1 mol/L.

Les débits de circulation de la solution tampon et de la solution aqueuse nitrique dans la colonne 10 sont avantageusement de 10 mL/min mais peuvent aller de 1 mL/min à 60 mL/min.

Le recueil des solutions issues de ces deux lavages est réalisé sous agitation de sorte que les solutions de lavage se mélangent à l'éluat au fur et à mesure qu'elles sont recueillies et, ainsi, acidifient cet éluat.

Ceci permet d'abaisser le pouvoir complexant de l'EDTA vis-à-vis du radium-228 et, par là même, d'obtenir une solution aqueuse A5 dans laquelle le radium-228 est décomplexé.

* *Étape e) :*

La colonne de chromatographie 40 est, de préférence, une colonne identique en tout point à la colonne 10, avec le même BV et la même quantité massique de particules Analig™ Ra-01.

Préalablement à la réalisation de l'étape e), la phase stationnaire 50 est conditionnée par percolation d'une solution d'une solution tampon dont le pH est au moins égal à 3 pour éviter que l'EDTA présent dans les n solutions aqueuses A5 (si n récipients 30 ont été utilisés au cours des étapes c) et d) des n séquences d'étapes a) à d)) ou du mélange de solutions aqueuses A5 (si un seul récipient 30 a été utilisé au cours des n séquences d'étapes a) à d)) ne précipite à l'intérieur de la colonne 40 et au plus égal à 5.

Cette solution tampon est, par exemple, une solution tampon d'acétate de sodium de pH 4,5.

Une fois ce conditionnement effectué, et après un éventuel ajustement du pH à une valeur au moins égale à 3 et, de préférence, au plus égale à 5, et idéalement de 4 à 5, des n solutions aqueuses A5 ou du mélange de solutions aqueuses A5, la colonne 40 est chargée avec les *n* solutions aqueuses A5 ou leur mélange.

Ce chargement est réalisé par circulation dans cette colonne des *n* solutions aqueuses A5 (que l'on injecte alors dans la colonne l'une après l'autre) ou du mélange de solutions aqueuses A5, à un faible débit, par exemple de 1 mL/min à 5 mL/min, et ce, pour favoriser la rétention du radium-228 par les particules Analig™ Ra-01.

* *Étape f) :*

Comme précédemment indiqué, cette étape consiste à soumettre la phase stationnaire 50 à deux lavages successifs, le premier avec une solution tampon de pH compris entre 3 et 5 et le second avec une solution aqueuse nitrique.

Le premier lavage, qui permet d'éliminer de la phase stationnaire 50 l'EDTA libre retenu dans le volume interstitiel de cette phase stationnaire, est réalisé en faisant circuler dans la colonne 40 plusieurs BV, par exemple 2,5 BV, d'une solution tampon dont le pH est au moins égal à 3 pour éviter, là également, que l'EDTA ne précipite à l'intérieur de la colonne 40 et au plus égal à 5 pour éviter que l'EDTA interstitiel ne recomplexe le radium-228.

Comme dans le cas du premier lavage de l'étape d), cette solution tampon est, par exemple, une solution tampon d'acétate de sodium de pH 4,5.

Le deuxième lavage, qui permet, lui, de conditionner la phase stationnaire 50, est réalisé en faisant circuler dans la colonne 40 plusieurs BV, par exemple 3 BV, d'une solution aqueuse d'acide nitrique faiblement concentrée telle qu'une solution aqueuse comprenant de 0,1 mol/L à 1 mol/L et, de préférence, 0,1 mol/L d'acide nitrique.

Les débits de circulation de la solution tampon et de la solution aqueuse d'acide nitrique dans la colonne 40 sont avantageusement de 5 mL/min mais peuvent aller de 1 mL/min à 5 mL/min.

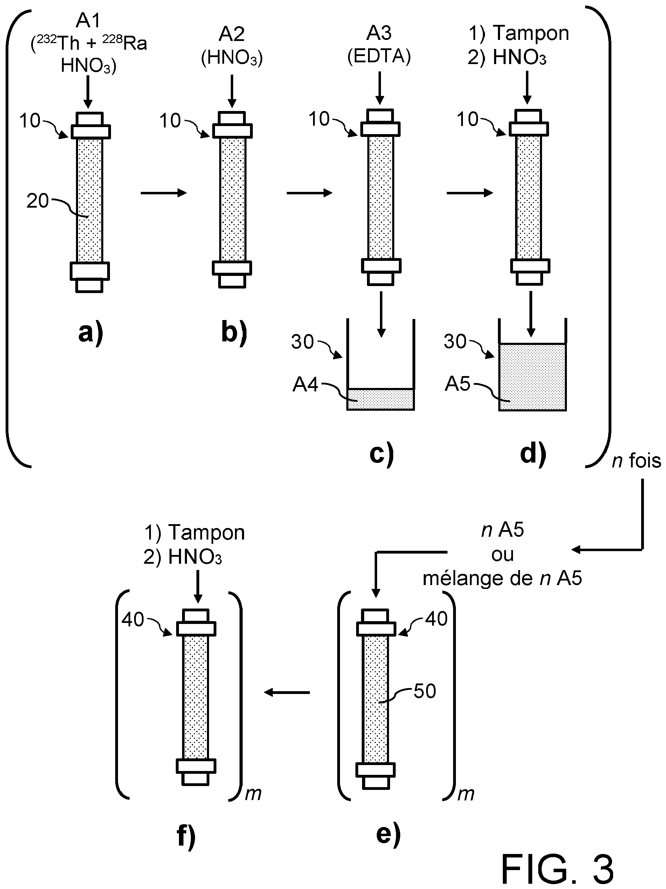

On se réfère à présent à la figure 3 qui représente un deuxième mode de mise en œuvre du procédé de l'invention.

Ce mode de mise en œuvre, qui vise à préparer une pluralité de générateurs, ne diffère de celui qui est illustré sur la figure 1 qu'en ce que :

- le nombre de séquences d'étapes a) à d) est supérieur ou égal à 3, typiquement compris entre 3 et 10 et, mieux encore, entre 4 et 6 ;
- les étapes e) et f) sont réalisées avec $m$ deuxièmes colonnes 40, $m$ étant un nombre entier supérieur ou égal à 2 mais inférieur au nombre $n$ de séquences d'étapes a) à d).

Ainsi, l'étape e) comprend le chargement des $m$ deuxièmes colonnes 40 avec les n solutions aqueuses A5 ou avec le mélange de solutions aqueuses A5 obtenus à l'issue de l'étape d) de la dernière des $n$ séquences d'étapes a) à d) avec, de préférence, une répartition équitable, c'est-à-dire à fractions égales, des $n$ solutions aqueuses A5 ou du mélange de solutions aqueuses A5 entre les $m$ deuxièmes colonnes 40.

L'étape f) comprend ensuite deux lavages successifs de chacune des $m$ phases stationnaires 50, le premier avec une solution tampon de pH acide pour éliminer des phases stationnaires 50 l'EDTA libre retenu dans ces phases stationnaires, et le second avec une solution aqueuse comprenant de l'acide nitrique pour conditionner les deuxièmes phases stationnaires 50 en vue de l'utilisation ultérieure des $m$ deuxièmes colonnes de chromatographie 40 comme générateurs.

### EXEMPLE DE MISE EN ŒUVRE DU PROCÉDÉ DE L'INVENTION

Le procédé de l'invention a été mis en œuvre selon le treizième mode de mise en œuvre décrit dans l'« Exposé de l'invention », pour fournir un seul générateur contenant du radium-228.

Dans cet exemple on a utilisé :

- trois premières colonnes 10 (soit $l$ égal à 3) et une seule seconde colonne 40 présentant chacune un BV de 78,54 mL et comprenant chacune entre 34 g et 37 g de particules Analig™ Ra-01 ;
- un récipient 30 par première colonne 10 (soit au total trois récipients 30) ; et
- les paramètres opératoires suivants :

     * nombre $n$ de fois où les séquences a) à f) ont été réalisées : 3, avec pour chaque séquence :
     * étape a) : circulation dans l'une des premières colonnes 10 de 1200 L d'une solution aqueuse A1 à 1 MBq/L de radium-228 (soit 1 200 MBq pour les 1 200 L) et 0,1 mol/L d'acide nitrique, à un débit de moyen de 35 mL/min ; puis
     * étape b) : circulation dans l'une des premières colonnes 10 de 15 BV d'une solution aqueuse A2 à 0,1 mol/L d'acide nitrique, à un débit de 40 mL/min ; puis
     * étape c) : circulation dans l'une des premières colonnes 10 d'une solution aqueuse A3 à 0,09 mol/L d'EDTA et de pH 10-11, selon la séquence suivante : 2 BV, à un débit de 10 mL/min - 20 minutes de pause - 4 BV, à un débit de 5 mL/min ; puis
     * étape d) : circulation dans l'une des premières colonnes 10 de 5 BV d'une solution tampon d'acétate de sodium de pH 4,5, à un débit de 10 mL/min, puis de 5 BV d'une solution aqueuse à 0,1 mol/L d'acide nitrique, à un débit de 10 mL/min de manière à collecter 16 BV de solution A5 contenant du radium-228 décomplexé dans chaque récipient 30 ;
     * étape e) : circulation dans l'unique deuxième colonne 40 des 16 BV recueillis dans chacun des récipients 30 à l'issue l'étape d), à un débit de 5 mL/min ;
     * étape f) : circulation dans la deuxième colonne 40 de 2,5 BV d'une solution tampon d'acétate de sodium de pH 4,5, à un débit de 5 mL/min, puis de 3 BV d'une solution aqueuse à 0,1 mol/L d'acide nitrique, à un débit de 5 mL/min.

À l'issue des deux réitérations des étapes a) à f), on a ainsi obtenu une colonne 40 comprenant 82 MBq de radium-228 par g de particules AnaLig™ Ra-01, soit au total 3 018 MBq de radium-228.

Ce qui signifie que la capacité utile des particules AnaLig™ Ra-01 constituant la phase stationnaire 50 a été augmentée d'un facteur de 2,5 par rapport à la capacité utile des particules AnaLig™ Ra-01 constituant les phases stationnaires 20.

### Revendications

**1.** Procédé de préparation d'au moins un générateur comprenant du radium-228 à partir d'une solution aqueuse A1 comprenant du thorium-232 et du radium-228, le procédé comprenant au moins les étapes suivantes :

a) circulation dans une première colonne de chromatographie (10) d'un volume V1 de solution aqueuse A1, la première colonne de chromatographie comprenant une première phase stationnaire (20) constituée d'un matériau solide qui retient sélectivement le radium par rapport au thorium ;
b) au moins un lavage de la première phase stationnaire (20) avec une solution aqueuse A2 ;
c) élution du radium-228 de la première phase stationnaire (20) avec un volume V3 d'une solution aqueuse A3 comprenant un agent complexant le radium-228, le volume V3 étant compris entre 0,005 % et 1 % du volume V1 de solution aqueuse A1 ayant circulé dans la première colonne de chromatographie, moyennant quoi on obtient une solution aqueuse A4 qui comprend des complexes de radium-228 ;
d) dissociation des complexes de radium-228 présents dans la solution aqueuse A4 par modification du pH de la solution aqueuse A4, moyennant quoi on obtient une solution aqueuse A5 comprenant du radium-228 décomplexé ;
e) chargement d'une deuxième colonne de chromatographie (40) avec la solution aqueuse A5, la deuxième colonne de chromatographie comprenant une deuxième phase stationnaire (50) constituée du même matériau que la première phase stationnaire ; et
f) au moins un lavage de la deuxième phase stationnaire (50) avec une solution aqueuse A6, moyennant quoi on obtient ledit au moins un générateur.

2. Procédé selon la revendication 1, dans lequel la solution aqueuse A1 est une solution issue de la dissolution d'un sel de thorium naturel dans de l'eau et, de préférence, une solution issue de la dissolution d'un nitrate de thorium dans de l'eau.

3. Procédé selon la revendication 1 ou la revendication 2, dans lequel :

- la solution aqueuse A1 comprend de 0,01 mol/L à 4 mol/L d'acide nitrique, et/ou
- la solution aqueuse A2 est une solution aqueuse acide et, de préférence, une solution comprenant de 0,01 mol/L à 4 mol/L d'acide nitrique.

4. Procédé selon l'une quelconque des revendications 1 à 3, dans lequel l'agent complexant le radium-228 est un acide aminopolycarboxylique ou un sel d'un acide aminopolycarboxylique, l'acide aminopolycarboxylique étant, de préférence, l'acide nitrilotriacétique, l'acide éthylènediaminetétraacétique ou l'acide diéthylènetriaminepentaacétique et, mieux encore, l'acide éthylènediamine-tétraacétique.

5. Procédé selon l'une quelconque des revendications 1 à 4, dans lequel la solution aqueuse A3 comprend de 0,03 mol/L à 1 mol/L d'acide éthylène diaminetétraacétique ou d'un sel de celui-ci et a un pH de 10 à 11.

6. Procédé selon l'une quelconque des revendications 1 à 5, dans lequel, à l'étape d), la modification du pH de la solution aqueuse A4 est une acidification pour amener le pH de la solution aqueuse A4 à une valeur au moins égale à 3 et, de préférence, au plus égale à 5.

7. Procédé selon la revendication 6, dans lequel l'étape d) comprend au moins un lavage de la première phase stationnaire (20) avec une solution aqueuse acide et un ajout de tout ou partie de la solution aqueuse issue du lavage à la solution aqueuse A4.

8. Procédé selon la revendication 7, dans lequel l'étape d) comprend :

- un premier lavage de la première phase stationnaire (20) avec une solution tampon dont le pH est au moins égal à 3 et, de préférence, au plus égal à 5 ; et
- un deuxième lavage de la première phase stationnaire (20) avec une solution aqueuse acide et, de préférence, une solution comprenant de 0,1 mol/L à 4 mol/L d'acide nitrique ;

et l'ajout de tout ou partie des solutions issues des lavages à la solution aqueuse A4.

9. Procédé selon la revendication 6, dans lequel l'étape d) comprend un ajout d'un acide à la solution aqueuse A4.

10. Procédé selon l'une quelconque des revendications 1 à 9, dans lequel la solution aqueuse A5 a un pH de 3 à 5 et, de préférence, égal à $4,5 \pm 0.4$.

11. Procédé selon l'une quelconque des revendications 1 à 10, dans lequel l'étape f) comprend :

- un premier lavage de la deuxième phase stationnaire (50) avec une solution tampon dont le pH est au moins égal à 3 et, de préférence, au plus égal à 5 ; et
- un deuxième lavage de la deuxième phase stationnaire (50) avec une solution aqueuse acide et, de préférence, une solution comprenant de 0,1 mol/L à 4 mol/L d'acide nitrique.

**12.** Procédé selon l'une des revendications 1 à 11, dans lequel l'étape a) de circulation de la solution aqueuse A1 est exécutée tant que le rendement de rétention du radium-228 par la première phase stationnaire est supérieur ou égal à une valeur seuil, la valeur seuil étant, de préférence, de 80 % et, mieux encore, de 90 %.

**13.** Procédé selon l'une quelconque des revendications 1 à 8 et 10 à 12, mettant en œuvre une seule première colonne de chromatographie et une seule deuxième colonne de chromatographie, et dans lequel :

> - on réalise $n$ fois les étapes a) à d) au moyen de la première colonne de chromatographie, $n$ étant un nombre entier supérieur ou égal à 2, moyennant quoi on produit n solutions aqueuses A5 que l'on collecte séparément ou ensemble pour obtenir un mélange de solutions aqueuses A5 ;
> - on réalise l'étape e) de chargement de la deuxième colonne de chromatographie avec les $n$ solutions aqueuses A5 ou le mélange de solutions aqueuses A5 ; et
> - on réalise l'étape f) de lavage de la deuxième phase stationnaire avec la solution aqueuse A6, moyennant quoi on obtient un seul générateur.

**14.** Procédé selon l'une quelconque des revendications 1 à 8 et 10 à 12, mettant en œuvre une seule première colonne de chromatographie, $m$ deuxièmes colonnes de chromatographie et $m$ deuxièmes phases stationnaires, et dans lequel :

> - on réalise $n$ fois les étapes a) à d) au moyen de la première colonne de chromatographie, $n$ étant un nombre entier supérieur ou égal à 3, moyennant quoi on produit $n$ solutions aqueuses A5 que l'on collecte séparément ou ensemble pour obtenir un mélange de solutions aqueuses A5 ;
> - on réalise l'étape e) de chargement des $m$ deuxièmes colonnes avec les $n$ solutions aqueuses A5 ou le mélange de solutions aqueuses A5, $m$ étant un nombre entier supérieur ou égal à 2 mais inférieur à $n$ ; et
> - on réalise l'étape f) de lavage des $m$ deuxièmes phases stationnaires avec la solution aqueuse A6, moyennant quoi on obtient $m$ générateurs.

**15.** Procédé selon l'une quelconque des revendications 1 à 6 et 9 à 12, mettant en œuvre une seule première colonne de chromatographie et une seule deuxième colonne de chromatographie, et dans lequel :

> - on réalise $n$ fois les étapes a) à c) au moyen de la première colonne de chromatographie, $n$

étant un nombre entier supérieur ou égal à 2, moyennant quoi on produit $n$ solutions aqueuses A4 que l'on collecte séparément ;
> - on réalise l'étape d) par un ajout d'acide aux $n$ solutions aqueuses A4, moyennant quoi on obtient $n$ solutions aqueuses A5 ;
> - on réalise l'étape e) de chargement de la deuxième colonne de chromatographie avec les $n$ solutions aqueuses A5 ; et
> - on réalise l'étape f) de lavage de la deuxième phase stationnaire avec la solution aqueuse A6, moyennant quoi on obtient un seul générateur.

**16.** Procédé selon l'une quelconque des revendications 1 à 6 et 9 à 12, mettant en œuvre une seule première colonne de chromatographie et une seule deuxième colonne de chromatographie, et dans lequel :

> - on réalise $n$ fois les étapes a) à c) au moyen de la première colonne de chromatographie, $n$ étant un nombre entier supérieur ou égal à 2, moyennant quoi on produit $n$ solutions aqueuses A4 que l'on collecte ensemble pour obtenir un mélange de solutions aqueuses A4 ;
> - on réalise l'étape d) par un ajout d'acide au mélange de solutions aqueuses A4, moyennant quoi on obtient une solution aqueuse A5 ;
> - on réalise l'étape e) de chargement de la deuxième colonne de chromatographie avec la solution aqueuse A5 ; et
> - on réalise l'étape f) de lavage de la deuxième phase stationnaire avec la solution aqueuse A6, moyennant quoi on obtient un seul générateur.

**17.** Procédé selon l'une quelconque des revendications 1 à 6 et 9 à 12, mettant en œuvre une seule première colonne de chromatographie, $m$ deuxièmes colonnes de chromatographie et $m$ deuxièmes phases stationnaires, et dans lequel :

> - on réalise $n$ fois les étapes a) à c) au moyen de la première colonne de chromatographie, $n$ étant un nombre entier supérieur ou égal à 3, moyennant quoi on produit $n$ solutions aqueuses A4 que l'on collecte séparément ;
> - on réalise l'étape d) par un ajout d'acide aux $n$ solutions aqueuses A4, moyennant quoi on obtient n solutions aqueuses A5 ;
> - on réalise l'étape e) de chargement des $m$ deuxièmes colonnes de chromatographie avec les $n$ solutions aqueuses A5, $m$ étant un nombre entier supérieur ou égal à 2 mais inférieur à $n$ ; et
> - on réalise l'étape f) de lavage des $m$ deuxièmes phases stationnaires avec la solution aqueuse A6, moyennant quoi on obtient $m$ générateurs.

**18.** Procédé selon l'une quelconque des revendications 1 à 6 et 9 à 12, mettant en œuvre une seule première colonne de chromatographie, *m* deuxièmes colonnes de chromatographie et *m* deuxièmes phases stationnaires, et dans lequel :

- on réalise *n* fois les étapes a) à c) au moyen de la première colonne de chromatographie, *n* étant un nombre entier supérieur ou égal à 3, moyennant quoi on produit *n* solutions aqueuses A4 que l'on collecte ensemble pour obtenir un mélange de solutions aqueuses A4 ;
- on réalise l'étape d) par un ajout d'acide au mélange de solutions aqueuses A4, moyennant quoi on obtient une solution aqueuse A5 ;
- on réalise l'étape e) de chargement des *m* deuxièmes colonnes de chromatographie avec la solution aqueuse A5, *m* étant un nombre entier supérieur ou égal à 2 mais inférieur à *n* ; et
- on réalise l'étape f) de lavage des *m* phases stationnaires avec la solution aqueuse A6, moyennant quoi on obtient *m* générateurs.

**19.** Procédé selon l'une quelconque des revendications 1 à 8 et 10 à 12, mettant en œuvre *l* premières colonnes de chromatographie, *l* premières phases stationnaires et une seule deuxième colonne de chromatographie, et on réalise :

- *n* fois les étapes a) à d) au moyen des *l* premières colonnes de chromatographie, *n* étant un nombre entier supérieur ou égal à 2 et *l* étant un nombre entier supérieur ou égal à 2 mais inférieur ou égal à *n,* moyennant quoi on produit *n* solutions aqueuses A5 que l'on collecte séparément ou ensemble pour obtenir un mélange de solutions aqueuses A5 ;
- l'étape e) de chargement de la deuxième colonne de chromatographie avec les *n* solutions aqueuses A5 ou le mélange de solutions aqueuses A5 ; et
- l'étape f) de lavage de la deuxième phase stationnaire avec la solution aqueuse A6, moyennant quoi on obtient un seul générateur.

**20.** Procédé selon l'une quelconque des revendications 1 à 6 et 9 à 12, mettant en œuvre *l* premières colonnes de chromatographie, *l* premières phases stationnaires et une seule deuxième colonne de chromatographie, et on réalise :

- *n* fois les étapes a) à c) au moyen des *l* premières colonnes de chromatographie, *n* étant un nombre entier supérieur ou égal à 2, typiquement compris entre 2 et 10 et, mieux encore, entre 4 et 6, et *l* étant un nombre entier supérieur ou égal à 2 mais inférieur ou égal à *n,* moyennant quoi on produit *n* solutions aqueuses A4 que l'on collecte séparément ou ensemble pour obtenir un mélange de solutions aqueuses A4;

- l'étape d) par un ajout d'acide aux *n* solutions aqueuses A4 ou au mélange de solutions aqueuses A4, moyennant quoi on obtient *n* solutions aqueuses A5 ;
- l'étape e) de chargement de la deuxième colonne de chromatographie avec les *n* solutions aqueuses A5 ; et
- l'étape f) de lavage de la deuxième phase stationnaire avec la solution aqueuse A6, moyennant quoi on obtient un seul générateur.

**Patentansprüche**

**1.** Verfahren zur Herstellung mindestens eines Generators, der Radium-228 umfasst, aus einer wässrigen Lösung A1, die Thorium-232 und Radium-228 umfasst, wobei das Verfahren mindestens die folgenden Schritte umfasst:

a) Zirkulieren in einer ersten Chromatographie-Säule (10) eines Volumens V1 einer wässrigen Lösung A1, wobei die erste Chromatographie-Säule eine erste stationäre Phase (20) umfasst, die aus einem festen Material gebildet ist, welches das Radium in Bezug auf Thorium selektiv zurückhält;
b) mindestens ein Waschen der ersten stationären Phase (20) mit einer wässrigen Lösung A2;
c) Eluieren vom Radium-228 aus der ersten stationären Phase (20) mit einem Volumen V3 einer wässrigen Lösung A3, die ein Mittel zum Komplexieren vom Radium-228 umfasst, wobei das Volumen V3 zwischen 0,005 % und 1 % des Volumens V1 einer wässrigen Lösung A1 ausmacht, die in der ersten Chromatographie-Säule zirkuliert ist, wodurch eine wässrige Lösung A4 erhalten wird, die Radium-228-Komplexe umfasst;
d) Trennen der Radium-228-Komplexe, die in der wässrigen Lösung A4 vorhanden sind, durch Ändern des pH-Werts der wässrigen Lösung A4, wodurch eine wässrige Lösung A5 erhalten wird, die dekomplexiertes Radium-228 umfasst;
e) Füllen einer zweiten Chromatographie-Säule (40) mit der wässrigen Lösung A5, wobei die zweite Chromatographie-Säule eine zweite stationäre Phase (50) umfasst, die aus demselben Material gebildet wird, wie die erste stationäre Phase; und
f) mindestens ein Waschen der zweiten stationären Phase (50) mit einer wässrigen Lösung A6 wodurch der mindestens eine Generator erhalten wird.

**2.** Verfahren nach Anspruch 1, wobei die wässrige Lösung A1 eine Lösung, die aus der Auflösung eines natürlichen Thorium-Salzes in Wasser stammt, und vorzugsweise eine Lösung ist, die aus der Auflösung eines Thorium-Nitrats in Wasser stammt.

3. Verfahren nach Anspruch 1 oder Anspruch 2, wobei:

   - die wässrige Lösung A1 von 0,01 mol/L bis 4 mol/L an Salpetersäure umfasst, und/oder
   - die wässrige Lösung A2 eine saure wässrige Lösung, und vorzugsweise eine Lösung ist, die von 0,01 mol/L bis 4 mol/L an Salpetersäure umfasst.

4. Verfahren nach einem der Ansprüche 1 bis 3, wobei das Mittel zum Komplexieren vom Radium-228 eine Aminopolycarbonsäure oder ein Salz einer Aminopolycarbonsäure ist, wobei die Aminopolycarbonsäure vorzugsweise Nitrilotriessigsäure, Ethylendiamintetraessigsäure, oder Diethylentriaminpentaessigsäure, und noch besser Ethylendiamintetraessigsäure ist.

5. Verfahren nach einem der Ansprüche 1 bis 4, wobei die wässrige Lösung A3 von 0,03 mol/L bis 1 mol/L an Ethylendiamintetraessigsäure oder einem Salz derselben umfasst, und einen pH-Wert von 10 bis 11 aufweist.

6. Verfahren nach einem der Ansprüche 1 bis 5, wobei in Schritt d) die Änderung des pH-Wertes der wässrigen Lösung A4 eine Versauerung ist, um den pH-Wert der wässrigen Lösung A4 auf einen Wert von mindestens gleich 3, und vorzugsweise höchstens gleich 5 zu bringen.

7. Verfahren nach Anspruch 6, wobei der Schritt d) mindestens ein Waschen der ersten stationären Phase (20) mit einer sauren wässrigen Phase und ein Beigeben der gesamten wässrigen Lösung oder eines Teils davon umfasst, die aus dem Waschen der wässrigen Lösung A4 stammt.

8. Verfahren nach Anspruch 7, wobei der Schritt d) umfasst:

   - ein erstes Waschen der ersten stationären Phase (20) mit einer Pufferlösung, deren pH-Wert mindestens gleich 3 ist, und vorzugsweise höchstens gleich 5 ist; und
   - ein zweites Waschen der ersten stationären Phase (20) mit einer sauren wässrigen Lösung und vorzugsweise einer Lösung, die 0,1 mol/L bis 4 mol/L an Salpetersäure umfasst;

   und das Beigeben der gesamten Lösungen oder eines Teils davon, die aus dem Waschen mit der wässrigen Lösung A4 stammen.

9. Verfahren nach Anspruch 6, wobei der Schritt d) ein Beigeben einer Säure zur wässrigen Lösung A4 umfasst.

10. Verfahren nach einem der Ansprüche 1 bis 9, wobei die wässrige Lösung A5 einen pH-Wert von 3 bis 5, und vorzugsweise gleich $4,5 \pm 0,4$ aufweist.

11. Verfahren nach einem der Ansprüche 1 bis 10, wobei der Schritt f) umfasst:

    - ein erstes Waschen der zweiten stationären Phase (50) mit einer Pufferlösung, deren pH-Wert mindestens gleich 3, und vorzugsweise höchstens gleich 5 ist; und
    - ein zweites Waschen der zweiten stationären Phase (50) mit einer sauren wässrigen Lösung, und vorzugsweise einer Lösung, die von 0,1 mol/L bis 4 mol/L an Salpetersäure umfasst.

12. Verfahren nach einem der Ansprüche 1 bis 11, wobei der Schritt a) des Zirkulierens der wässrigen Lösung A1 ausgeführt wird, solange die Rückhalteleistung vom Radium-228 durch die erste stationäre Phase größer oder gleich einem Schwellenwert ist, wobei der Schwellenwert vorzugsweise 80 %, und noch besser 90 % beträgt.

13. Verfahren nach einem der Ansprüche 1 bis 8 und 10 bis 12, das eine einzige erste Chromatographie-Säule und eine einzige zweite Chromatographie-Säule einsetzt, und wobei:

    - $n$ Mal die Schritte a) bis d) anhand der ersten Chromatographie-Säule ausgeführt werden, wobei $n$ eine ganze Zahl größer oder gleich 2 ist, wodurch $n$ wässrige Lösungen A5 erzeugt werden, die getrennt oder gemeinsam gesammelt werden, um ein Gemisch an wässrigen Lösungen A5 zu erhalten;
    - der Schritt e) zum Füllen der zweiten Chromatographie-Säule mit den $n$ wässrigen Lösungen A5 oder dem Gemisch an wässrigen Lösungen A5 ausgeführt wird; und
    - der Schritt f) zum Waschen der zweiten stationären Phase mit der wässrigen Lösung A6 ausgeführt wird, wodurch ein einziger Generator erhalten wird.

14. Verfahren nach einem der Ansprüche 1 bis 8 und 10 bis 12, das eine einzige erste Chromatographie-Säule, m zweite Chromatographie-Säulen und m zweite stationäre Phasen einsetzt, und wobei:

    - n Mal die Schritte a) bis d) anhand der ersten Chromatographie-Säule ausgeführt werden, wobei $n$ eine ganze Zahl größer oder gleich 3 ist, wodurch $n$ wässrige Lösungen A5 erzeugt werden, die getrennt oder gemeinsam gesammelt werden, um ein Gemisch an wässrigen Lösungen A5 zu erhalten;
- der Schritt e) zum Füllen der *m* zweiten Säulen mit den n wässrigen Lösungen A5 oder dem Gemisch an wässrigen Lösungen A5 ausgeführt wird, wobei m eine ganze Zahl größer oder gleich 2, jedoch kleiner als *n* ist; und
- der Schritt f) zum Waschen der *m* zweiten stationären Phasen mit der wässrigen Lösung A6 ausgeführt wird, wodurch *m* Generatoren erhalten werden.

15. Verfahren nach einem der Ansprüche 1 bis 6 und 9 bis 12, das eine einzige erste Chromatographie-Säule, und eine einzige zweite Chromatographie-Säule einsetzt, und wobei:

- *n* Mal die Schritte a) bis c) anhand der ersten Chromatographie-Säule ausgeführt werden, wobei *n* eine ganze Zahl größer oder gleich 2 ist, wodurch *n* wässrige Lösungen A4 erzeugt werden, die getrennt gesammelt werden;
- der Schritt d) durch Beigeben von Säure zu den *n* wässrigen Lösungen A4 ausgeführt wird, wodurch *n* wässrige Lösungen A5 erhalten werden;
- der Schritt e) zum Füllen der zweiten Chromatographie-Säule mit den *n* wässrigen Lösungen A5 ausgeführt wird; und
- der Schritt f) zum Waschen der zweiten stationären Phase mit der wässrigen Lösung A6 ausgeführt wird, wodurch ein einziger Generator erhalten wird.

16. Verfahren nach einem der Ansprüche 1 bis 6 und 9 bis 12, das eine einzige erste Chromatographie-Säule, und eine einzige zweite Chromatographie-Säule einsetzt, und wobei:

- *n* Mal die Schritte a) bis c) anhand der ersten Chromatographie-Säule ausgeführt werden, wobei *n* eine ganze Zahl größer oder gleich 2 ist, wodurch *n* wässrige Lösungen A4 erzeugt werden, die gemeinsam gesammelt werden, um ein Gemisch an wässrigen Lösungen A4 zu erhalten;
- der Schritt d) durch Beigeben von Säure zum Gemisch an wässrigen Lösungen A4 ausgeführt wird, wodurch eine wässrige Lösung A5 erhalten wird;
- der Schritt e) zum Füllen der zweiten Chromatographie-Säule mit der wässrigen Lösung A5 ausgeführt wird; und
- der Schritt f) zum Waschen der zweiten stationären Phase mit der wässrigen Lösung A6 ausgeführt wird, wodurch ein einziger Generator erhalten wird.

17. Verfahren nach einem der Ansprüche 1 bis 6 und 9 bis 12, das eine einzige erste Chromatographie-Säule, *m* zweite Chromatographie-Säulen und *m* zweite stationäre Phasen einsetzt, und wobei:

- *n* Mal die Schritte a) bis c) anhand der ersten Chromatographie-Säule ausgeführt werden, wobei *n* eine ganze Zahl größer oder gleich 3 ist, wodurch *n* wässrige Lösungen A4 erzeugt werden, die getrennt gesammelt werden;
- der Schritt d) durch Beigeben von Säure zu den *n* wässrigen Lösungen A4 ausgeführt wird, wodurch *n* wässrige Lösungen A5 erhalten werden;
- der Schritt e) zum Füllen der *m* zweiten Chromatographie-Säule mit den *n* wässrigen Lösungen A5 ausgeführt wird, wobei *m* eine ganze Zahl größer oder gleich 2, jedoch kleiner als n ist; und
- der Schritt f) zum Waschen der *m* zweiten stationären Phasen mit der wässrigen Lösung A6 ausgeführt wird, wodurch *m* Generatoren erhalten werden.

18. Verfahren nach einem der Ansprüche 1 bis 6 und 9 bis 12, das eine einzige erste Chromatographie-Säule, *m* zweite Chromatographie-Säulen, und *m* zweite stationäre Phasen einsetzt, und wobei:

- n Mal die Schritte a) bis c) anhand der ersten Chromatographie-Säule ausgeführt wird, wobei *n* eine ganze Zahl größer oder gleich 3 ist, wodurch *n* wässrige Lösungen A4 erzeugt werden, die gemeinsam gesammelt werden, um ein Gemisch an wässrigen Lösungen A4 zu erhalten;
- der Schritt d) durch Beigeben von Säure zum Gemisch an wässrigen Lösungen A4 ausgeführt wird, wodurch eine wässrige Lösung A5 erhalten wird;
- der Schritt e) zum Füllen der *m* zweiten Chromatographie-Säulen mit der wässrigen Lösung A5 ausgeführt wird, wobei *m* eine ganze Zahl größer oder gleich 2, jedoch kleiner als n ist; und
- der Schritt f) zum Waschen der *m* stationären Phasen mit der wässrigen Lösung A6 ausgeführt wird, wodurch m Generatoren erhalten werden.

19. Verfahren nach einem der Ansprüche 1 bis 8 und 10 bis 12, das *l* erste Chromatographie-Säulen, *l* erste stationäre Phasen, und eine einzige zweite Chromatographie-Säule einsetzt, und wobei Folgendes ausgeführt wird:

- n Mal die Schritte a) bis d) anhand der *l* ersten Chromatographie-Säulen, wobei *n* eine ganze Zahl größer oder gleich 2 ist, und *l* eine ganze Zahl größer oder gleich 2, jedoch kleiner oder gleich *n* ist, wodurch *n* wässrige Lösungen A5 erzeugt werden, die getrennt oder gemeinsam gesammelt werden, um ein Gemisch an wässrigen Lösungen A5 zu erhalten;

- der Schritt e) zum Füllen der zweiten Chromatographie-Säule mit den *n* wässrigen Lösungen A5 oder dem Gemisch an wässrigen Lösungen A5; und

- der Schritt f) zum Waschen der zweiten stationären Phase mit der wässrigen Lösung A6, wodurch ein einziger Generator erhalten wird.

**20.** Verfahren nach einem der Ansprüche 1 bis 6 und 9 bis 12, das *l* erste Chromatographie-Säulen, *l* erste stationäre Phasen, und eine einzige zweite Chromatographie-Säule einsetzt, und wobei Folgendes ausgeführt wird:

- *n* Mal die Schritte a) bis c) anhand der *l* ersten Chromatographie-Säulen, wobei *n* eine ganze Zahl größer oder gleich 2 ist, typischerweise zwischen 2 und 10, und noch besser zwischen 4 und 6 liegt, und *l* eine ganze Zahl größer oder gleich 2, jedoch kleiner oder gleich *n* ist, wodurch *n* wässrige Lösungen A4 erzeugt werden, die getrennt oder gemeinsam gesammelt werden, um ein Gemisch an wässrigen Lösungen A4 zu erhalten;

- der Schritt d) durch Beigeben von Säure zu den *n* wässrigen Lösungen A4 oder zum Gemisch an wässrigen Lösungen A4, wodurch *n* wässrige Lösungen A5 erhalten werden;

- der Schritt e) zum Füllen der zweiten Chromatographie-Säule mit den *n* wässrigen Lösungen A5; und

- der Schritt f) zum Waschen der zweiten stationären Phase mit der wässrigen Lösung A6, wodurch ein einziger Generator erhalten wird.

## Claims

**1.** Method for preparing at least one generator comprising radium-228 from an aqueous solution A1 comprising thorium-232 and radium-228, the method comprising at least the following steps:

a) circulating in a first chromatography column (10) a volume V1 of the aqueous solution A1, the first chromatography column comprising a first stationary phase (20) consisting of a solid material which selectively retains radium with respect to thorium;

b) washing at least once the first stationary phase (20) with an aqueous solution A2;

c) eluting the radium-228 from the first stationary phase with a volume V3 of an aqueous solution A3 comprising an agent complexing radium-228, the volume V3 being between 0.005% and 1% of the volume V1 of the aqueous solution A1 having circulated in the first chromatography column, whereby an aqueous solution A4 which comprises radium-228 complexes is obtained;

d) dissociating the radium-228 complexes present in the aqueous solution A4 by modifying the pH of the aqueous solution A4, whereby an aqueous solution A5 comprising the decomplexed radium-228 is obtained;

e) loading a second chromatography column (40) with the aqueous solution A5, the second chromatography column comprising a second stationary phase (50) consisting of the same material as the first stationary phase; and

f) washing at least once the second stationary phase (50) with an aqueous solution A6, whereby said at least one generator is obtained.

**2.** Method according to claim 1, wherein the aqueous solution A1 is a solution obtained from dissolving a natural thorium salt in water and, preferably, a solution obtained from dissolving a thorium nitrate in water.

**3.** Method according to claim 1 or claim 2, wherein:

- the aqueous solution A1 comprises from 0.01 mol/L to 4 mol/L of nitric acid; and/or
- the aqueous solution A2 is an acidic aqueous solution and, preferably, a solution comprising from 0.01 mol/L to 4 mol/L of nitric acid.

**4.** Method according to any one of claims 1 to 3, wherein the agent complexing radium-228 is an aminopolycarboxylic acid or an aminopolycarboxylic acid salt, the aminopolycarboxylic acid being preferably nitrilotriacetic acid, ethylenediaminetetraacetic acid or diethylenetriaminepentaacetic acid and, still better, ethylenediaminetetraacetic acid.

**5.** Method according to any one of claims 1 to 4, wherein the aqueous solution A3 comprises from 0.03 mol/L to 1 mol/L of ethylenediaminetetraacetic acid or a salt thereof and has a pH of 10 to 11.

**6.** Method according to any one of claims 1 to 5, wherein, in step d), the modification of the pH of the aqueous solution A4 is an acidification to bring the pH of the aqueous solution A4 to a value at least equal to 3 and, preferably, at most equal to 5.

**7.** Method according to claim 6, wherein step d) comprises at least one washing of the first stationary phase (20) with an acidic aqueous solution and an addition of all or part of the aqueous solution issued from the washing to the aqueous solution A4.

8. Method according to claim 7, wherein step d) comprises:

   - a first washing of the first stationary phase (20) with a buffer solution whose pH is at least equal to 3 and, preferably, at most equal to 5; and
   - a second washing of the first stationary phase (20) with an acidic aqueous solution and, preferably, a solution comprising from 0.1 mol/L to 4 mol/L of nitric acid; and an addition of all or part of the solutions issued from the washings to the aqueous solution A4.

9. Method according to claim 6, wherein step d) comprises an addition of an acid to the aqueous solution A4.

10. Method according to any one of claims 1 to 9, wherein the aqueous solution A5 has a pH of 3 to 5 and, preferably, equal to $4.5 \pm 0.4$.

11. Method according to any one of claims 1 to 10, wherein step f) comprises:

    - a first washing of the second stationary phase (50) with a buffer solution whose pH is at least equal to 3 and, preferably, at most equal to 5; and
    - a second washing of the second stationary phase (50) with an acidic aqueous solution and, preferably, a solution comprising from 0.1 mol/L to 4 mol/L of nitric acid.

12. Method according to any one of claims 1 to 11, wherein step a) of circulating the aqueous solution A1 is performed as long as the radium-228 retention yield by the first stationary phase is greater than or equal to a threshold value, the threshold value being preferably 80% and, still better, 90%.

13. Method according to any one of claims 1 to 8 and 10 to 12, using a single first chromatography column and a single second chromatography column, and wherein:

    - steps a) to d) are carried out $n$ times by means of the first chromatography column, $n$ being an integer greater than or equal to 2, whereby $n$ aqueous solutions A5 are produced which are collected separately or together to obtain a mixture of aqueous solutions A5;
    - step e) of loading the second chromatography column is carried out with the n aqueous solutions A5 or the mixture of aqueous solutions A5; and
    - step f) of washing the second stationary phase is carried out with the aqueous solution A6, whereby a single generator is obtained.

14. Method according to any one of claims 1 to 8 and 10 to 12, using a single first chromatography column, $m$ second chromatography columns and $m$ second stationary phases, and wherein:

    - steps a) to d) are carried out $n$ times by means of the first chromatography column, $n$ being an integer greater than or equal to 3, whereby $n$ aqueous solutions A5 are produced which are collected separately or together to obtain a mixture of aqueous solutions A5;
    - step e) of loading the $m$ second columns is carried out with the $n$ aqueous solutions A5 or the mixture of aqueous solutions A5, $m$ being an integer greater than or equal to 2 but less than $n$; and
    - step f) of washing the $m$ second stationary phases is carried out with the aqueous solution A6, whereby $m$ generators are obtained.

15. Method according to any one of claims 1 to 6 and 9 to 12, using a single first chromatography column and a single second chromatography column, and wherein:

    - steps a) to c) are carried out $n$ times by means of the first chromatography column, $n$ being an integer greater than or equal to 2, whereby $n$ aqueous solutions A4 are produced which are collected separately;
    - step d) is carried out by adding acid to the $n$ aqueous solutions A4, whereby $n$ aqueous solutions A5 are obtained;
    - step e) of loading the second chromatography column is carried out with the $n$ aqueous solutions A5; and
    - step f) of washing the second stationary phase is carried out with the aqueous solution A6, whereby a single generator is obtained.

16. Method according to any one of claims 1 to 6 and 9 to 12, using a single first chromatography column and a single second chromatography column, and wherein:

    - steps a) to c) are carried out $n$ times by means of the first chromatography column, $n$ being an integer greater than or equal to 2, whereby $n$ aqueous solutions A4 are produced which are collected together to obtain a mixture of aqueous solutions A4;
    - step d) is carried out by adding acid to the mixture of aqueous solutions A4, whereby an aqueous solution A5 is obtained;
    - step e) of loading the second chromatography column is carried out with the aqueous solution A5; and
    - step f) of washing the second stationary phase is carried out with the aqueous solution A6, whereby a single generator is obtained.

17. Method according to any one of claims 1 to 6 and 9 to 12, using a single first chromatography column, $m$ second chromatography columns and $m$ second stationary phases, and wherein:

- steps a) to c) are carried out $n$ times by means of the first chromatography column, $n$ being an integer greater than or equal to 3, whereby $n$ aqueous solutions A4 are produced which are collected separately;
- step d) is carried out by adding acid to the $n$ aqueous solutions A4, whereby $n$ aqueous solutions A5 are obtained;
- step e) of loading the $m$ second chromatography columns is carried out with the $n$ aqueous solutions A5, $m$ being an integer greater than or equal to 2 but less than $n$; and
- step f) of washing the $m$ second stationary phases is carried out with the aqueous solution A6, whereby m generators are obtained.

18. Method according to any one of claims 1 to 6 and 9 to 12, using a single first chromatography column, $m$ second chromatography columns and $m$ second stationary phases, and wherein:

- steps a) to c) are carried out $n$ times by means of the first chromatography column, $n$ being an integer greater than or equal to 3, whereby $n$ aqueous solutions A4 are produced which are collected together to obtain a mixture of aqueous solutions A4;
- step d) is carried out by adding acid to the mixture of aqueous solutions A4, whereby an aqueous solution A5 is obtained;
- step e) of loading the $m$ second chromatography columns is carried out with the aqueous solution A5, $m$ being an integer greater than or equal to 2 but less than n; and
- step f) of washing the $m$ stationary phases is carried out with the aqueous solution A6, whereby $m$ generators are obtained.

19. Method according to any one of claims 1 to 8 and 10 to 12, using $l$ first chromatography columns, $l$ first stationary phases and a single second chromatography column, and wherein:

- steps a) to d) are carried out $n$ times by means of the $l$ first chromatography columns, $n$ being an integer greater than or equal to 2 and $l$ being an integer greater than or equal to 2 but less than or equal to $n$, whereby $n$ aqueous solutions A5 are produced which are collected separately or together to obtain a mixture of aqueous solutions A5;
- step e) of loading the second chromatography column is carried out with the n aqueous solutions A5 or the mixture of aqueous solutions A5; and
- step f) of washing the second stationary phase is carried out with the aqueous solution A6, whereby a single generator is obtained.

20. Method according to any one of claims 1 to 6 and 9 to 12, using $l$ first chromatography columns, $l$ first stationary phases and a single second chromatography column, and wherein:

- steps a) to c) are carried out $n$ times by means of the $l$ first chromatography columns, $n$ being an integer greater than or equal to 2, typically between 2 and 10 and, more preferably, between 4 and 6, and $l$ being an integer greater than or equal to 2 but less than or equal to $n$, whereby $n$ aqueous solutions A4 are produced which are collected separately or together to obtain a mixture of aqueous solutions A4;
- step d) is carried out by adding acid to the $n$ aqueous solutions A4 or to the mixture of aqueous solutions A4, whereby $n$ aqueous solutions A5 are obtained;
- step e) of loading the second chromatography column is carried out with the n aqueous solutions A5; and
- step f) of washing the second stationary phase is carried out with the aqueous solution A6, whereby a single generator is obtained.

FIG. 1

FIG. 2

FIG. 3